# EUROPÄISCHE PATENTSCHRIFT

(11) **EP 3 014 978 B1**
(45) Veröffentlichungstag und Bekanntmachung des Hinweises auf die Patenterteilung: **01.01.2020**
(21) Anmeldenummer: 15189122.3
(22) Anmeldetag: 09.10.2015
(51) Int. Cl.: A01F 15/07

(54) **RUNDBALLENPRESSE MIT BALLENWICKLER**
ROUND BALER WITH BALE WRAPPER
PRESSE A BALLES RONDES EQUIPEE D'UNE ENRUBANNEUSE

(30) Priorität: 30.10.2014 DE 102014222213
(43) Veröffentlichungstag der Anmeldung: 04.05.2016
(73) Patentinhaber: Deere & Company, Moline, IL 61265 (US)
(72) Erfinder: Guerin, Sebastien, 25000 Besancon (FR)
(74) Vertreter: Reichert, Christian

(56) Entgegenhaltungen:
- EP-A1- 1 266 562
- WO-A1-93/07059
- DE-U1- 20 005 963
- US-A1- 2012 090 273

## Beschreibung

Die Erfindung betrifft eine Rundballenpresse mit Ballenwickler.

Rundballenpressen mit Ballenwicklern sind bekannt, insbesondere Rundballenpressen, wobei der Ballenwickler entweder als angehängte zusätzliche Baugruppe oder als angebaute integrierte Baugruppe mit der Rundballenpresse verbunden ist, so dass durch die Rundballenpresse gepresste Ballen in einem Arbeitszyklus umwickelt werden können. Die Ballenwickler weisen eine rotierende Ballenwickeleinrichtung auf, die beispielsweise mit zwei um den Ballen vertikal geführten Rotationsarmen ausgestattet ist, an denen Rollen mit Umwicklungsmaterial gelagert sind. Die Rotationsarme bzw. die Rollen werden entlang einer Kreisbahn um den Ballen geführt und dabei das auf den Rollen geführte Umwicklungsmaterial um den Ballen gewickelt. Gleichzeitig dreht sich der auf einem Wickeltisch nach dem Entladen aus der Presskammer gelagerte Ballen um seine Rotationsachse, so dass nach wenigen Umrundungen der Rollen der gesamte Rundballen umwickelt ist. Die um den Ballen kreisenden Rotationsarme definieren einen Aktionsbereich des Ballenwicklers.

Eine derartige Rundballenpresse mit Ballenwickler ist in DE 200 05 963 U1 offenbart. Die Rundballenpresse umfasst eine Presskammer zum Ballenformen und der Wickler einen Wickeltisch und einen Stelltrieb zum Abwerfen eines umwickelten Ballens. Eine Steuervorrichtung ist vorgesehen ist, die mit dem Stelltrieb und mit wenigstens einer Abtasteinrichtung für den Füllungsgrad oder das Ballengewicht in der Presskammer verbunden ist, um die Abwerfbewegung oder eine Freigabe der Abwerfbewegung des umwickelten Ballens bis zum Erreichen eines vorbestimmten Füllungsgrades oder Ballengewichts in der Presskammer zu blockieren.

Immer wieder kommt es zu Verletzungen und Unfällen, bei denen Bedienpersonen oder Dritte unachtsam in den Aktionsbereich gelangen. Es besteht daher ein allgemeines Bestreben darin, dies beim Einsatz von Rundballenpressen mit Ballenwicklern präventiv zu vermeiden, wobei neue Sicherheitsstandards erfüllt werden sollen (insbesondere gemäß ISO 4254-14).

Die der Erfindung zugrunde liegende Aufgabe wird darin gesehen, eine Rundballenpresse mit Ballenwickler zu schaffen, die den oben genannten Erfordernissen gerecht wird und eine entsprechende Sicherheitsvorkehrung vorsieht.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird eine Rundballenpresse mit Ballenwickler vorgeschlagen, wobei der Ballenwickler eine um eine vertikale Rotationsachse rotierbare Ballenwickeleinrichtung mit sich parallel zur Rotationsachse erstreckenden Rotationsarmen umfasst, an denen Rollen für Umwicklungsmaterial innerhalb eines sich quer und längs zur Rotationsachse erstreckenden Aktionsbereich der Ballenwickeleinrichtung geführt werden, wobei ein an der Rundballenpresse oder am Ballenwickler angeordnetes Umgrenzungsgestänge angeordnet ist, welches sich rückseitig der Rundballenpresse erstreckt und aus einer oberen Stellung in eine untere Stellung und umgekehrt schwenkbar ist und mit welchem in der unteren Stellung ein rückseitig der Rundballenpresse gelegener Bereich des Aktionsbereichs der Ballenwickeleinrichtung horizontal umgrenzt ist. Dadurch kann ein robustes und stabiles Umgrenzungsgestänge geschaffen werden, welches bei Bedarf, nämlich beim Ballenwickelvorgang, heruntergeschwenkt werden kann und den Aktionsraum umgibt und nach außen abgrenzt. Eine Bedienperson oder Dritte werden dadurch effektiv gehindert (davor geschützt) in den Aktionsraum zu gelangen. Das Umgrenzungsgestänge ist auf einfache Weise wieder aus dem Aktionsbereich des Ballenwicklers zu entfernen, indem es in eine obere Stellung, in die Transport- oder Ballenauswurfstellung geschwenkt wird. Die untere Stellung stellt die Umgrenzungs- bzw. Ballenumwickelungsstellung dar.

Das Umgrenzungsgestänge weist mehrere Gestängeteile auf, wobei beidseitig der Rundballenpresse oder des Ballenwicklers angeordnete erste Gestängeteile vorgesehen sind, die an der Rundballenpresse oder an dem Ballenwickler auf horizontalen Schwenkachsen gelagert sind. Die ersten Gestängeteile können schwenkbar beidseitig der Rundballenpresse oder des Ballenwicklers, vorzugsweise seitlich an der Rückseite oder einem rückseitigen Bereich der Rundballenpresse oder seitlich des Ballenwicklers nahe der Rückseite der Rundballenpresse angeordnet sein. Vorzugsweise sind Aktoren (Stellzylinder, Elektromotor) vorgesehen, mit denen die ersten Gestängeteile verschwenkbar sind.

Die Schwenkachsen sind vorzugsweise in einem spitzen Winkel zur Querrichtung der Rundballenpresse angeordnet, so dass die ersten Gestängeteile beim Schwenken des Umgrenzungsgestänges aus der oberen in die untere Stellung schräg nach hinten und außen ausschwenken. Mit anderen Worten: beim Schwenken der ersten Gestängeteile werden die schwenkbaren Enden der ersten Gestängeteile in einer von oben nach unten gerichteten Schwenkbewegung gleichzeitig in Bezug auf die Rundballenpresse seitlich nach außen verlagert, oder umgekehrt, in einer von unten nach oben gerichteten Schwenkbewegung in Bezug auf die Rundballenpresse von außen nach innen verlagert. Dies hat den Vorteil, dass das Umgrenzungsgestänge in der Transport- oder Ballenauswurfstellung eine geringere Breite einnimmt als in der Umgrenzungs- bzw. Ballenumwickelungsstellung. Damit kann das Umgrenzungsgestänge in der Umgrenzungs- bzw. Ballenumwickelungsstellung über die Seiten der Rundballenpresse bzw. des Ballenwicklers hinausragen und einen gewissen Bereich, über die Seiten des Ballenwicklers hinaus abgrenzen bzw. einen entsprechenden Umgrenzungsschutz darstellen. Für Transportzwecke wird das Umgrenzungsgestänge in die obere Stellung verbracht, wodurch die über die Seiten hinausragenden Enden der Gestängeteile wieder nach innen verlagert werden und somit innerhalb der zugelassenen Transportbreite der Rundballenpresse liegen.

Das Umgrenzungsgestänge umfasst sich an den beidseitigen ersten Gestängeteilen gelenkig anschließende zweite Gestängeteile. Die zweiten Gestängeteile sind vorzugsweise in einer gleichbleibenden horizontalen Ausrichtung gehalten, d.h. dass sich ihre horizontale Ausrichtung beim Schwenken des Umgrenzungsgestänges bzw. der ersten Gestängeteile nicht verändert und lediglich die Höhe und die Position in Längsrichtung der Rundballenpresse verändert. So wird in Bezug auf die Längsrichtung der Rundballenpresse das zweite Gestängeteil beim Schwenken aus einer hinteren unteren Stellung in eine vordere obere Stellung verbracht. Durch das gelenkig an den ersten Gestängeteil anschließende zweite Gestängeteil können Relativbewegungen zwischen dem ersten und dem zweiten Gestängeteil stattfinden, die insbesondere beim Schwenken des Umgrenzungsgestänges zum Tragen kommen.

Die zweiten Gestängeteile sind an ihren den ersten Gestängeteilen abgewandten Enden gelenkig zusammengeführt. Damit wird eine rückseitige Umschließung des Ballenwicklers bereitgestellt. Somit ist der gesamte Aktionsbereich, der bei einem Ballenumwicklungsvorgang für eine Bedienperson oder einem Dritten zugänglich wäre durch das Umgrenzungsgestänge absperrbar.

Die beidseitigen ersten Gestängeteile können als Parallelogrammgestänge ausgebildet sein, wobei eine Parallelführung der mit den zweiten Gestängeteilen verbundenen Enden gegenüber den an der Rundballenpresse oder dem Ballenwickler befestigten Enden gewährleistet wird. Damit ist auch eine unabhängig von der Schwenkstellung des ersten Gestängeteils gleichbleibende Ausrichtung des mit dem zweiten Gestängeteils verbundenen Endes vorgegeben.

Die zweiten Gestängeteile sind durch vertikal ausgerichtete Gelenkachsen mit den ersten Gestängeteilen oder miteinander gelenkig verbunden sind. Die vertikal ausgerichteten Gelenkachsen können als Verlängerung der parallel geführten Enden der ersten Gestängeteile oder auch als an die Enden aufgesetzte bzw. befestigte Gelenkbolzen ausgebildet sein. Die zweiten Gestängeteile sind schwenkbar an den vertikal ausgerichteten Gelenkachsen angelenkt. Durch eine beim Schwenken durchgehend vertikal gehaltene Stellung der Gelenkbolzen, beispielsweise durch die Parallelführung des ersten Gestängeteils, kann der zweite Gestängeteil in Querrichtung, also nach außen und nach innen zur Mitte der Rundballenpresse hin, schwenken. Eine Verbindung der nicht mit den ersten Gelenkteilen verbundenen Enden der zweiten Gelenkteile durch eine vertikale Gelenkachse führt zu einer zuvor genannte Umschließung des Aktionsbereichs des Ballenwicklers. Somit bilden die rückseitig an der Rundballenpresse befestigten ersten Gestängeteile zusammen mit den an den ersten Gestängeteilen angeschlossenen zweiten Gestängeteilen und der Zusammenschluss der zweiten Gestängeteile miteinander ein Umgrenzungsgestänge, welches den Aktionsbereich des Ballenwicklers zu in etwa dreiviertel umschließt bzw. umgrenzt. Das verbliebene, nicht von dem Umgrenzungsgestänge umschlossene Viertel des Aktionsbereichs des Ballenwicklers wird von der Rückseite der Rundballenpresse abgedeckt bzw. abgegrenzt, nämlich dadurch, dass der Ballenwickler unmittelbar hinter die Rundballenpresse angehängt ist bzw. angebaut ist, und von dieser Seite her jeglicher Zugang zum Ballenwickler durch die Rundballenpresse versperrt ist. Durch die gewählte Verbindungsanordnung der ersten und zweiten Gestängeteile (nämlich durch die schräg angesetzten Schwenkachsen am ersten Gestängeteil und das damit verbundene seitliche Ausschwenken der mit den zweiten Gestängeteilen verbundenen Enden der ersten Gestängeteile, sowie durch die Verbindung der zweiten Gestängeteile miteinander rückseitig des Ballenwicklers) weitet sich das gesamte Umgrenzungsgestänge beim Schwenken in die Umgrenzungsstellung (Absenken des Umgrenzungsgestänges) in Querrichtung zur Rundballenpresse aus (über die Seiten der Rundballenpresse hinaus) und reduziert sich in Längsrichtung der Rundballenpresse, wobei ein nahezu dreiviertelkreisförmiger Bogen um den Aktionsbereich des Ballenwicklers herum gebildet wird. Beim Schwenken in die Transport- bzw. Ballenauswurfstellung (Anheben) hingegen wird der gegenteilige Effekt erzielt, wobei sich das gesamte Umgrenzungsgestänge beim Schwenken in die Transportstellung (Anheben des Umgrenzungsgestänges) in Querrichtung zur Rundballenpresse verschmälert (zur Mitte der Rundballenpresse hin) und sich in Längsrichtung der Rundballenpresse streckt, wobei ein elypsenförmiger Bogen im Wesentlichen oberhalb des Aktionsbereichs des Ballenwicklers gebildet wird, der zum einen die erlaubte Transportbreite nicht (mehr) überschreitet und zum anderen den Auswurfbereich für den gewickelten Ballen freigibt bzw. nicht behindert. In dieser Transport- bzw. Ballenauswurfstellung ist ein Rotationsbetrieb des Ballenwicklers deaktiviert, so dass keine Gefahr vom Ballenwickler ausgehen kann.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.
- Fig. 1: eine schematische Seitenansicht einer Kombination aus Rundballenpresse und Ballenwickler mit einem Umgrenzungsgestänge in mehreren Höhenstellungen und
- Fig. 2: eine schematische Oberansicht der Kombination aus Rundballenpresse und Ballenwickler mit Umgrenzungsgestänge gemäß Figur 1.

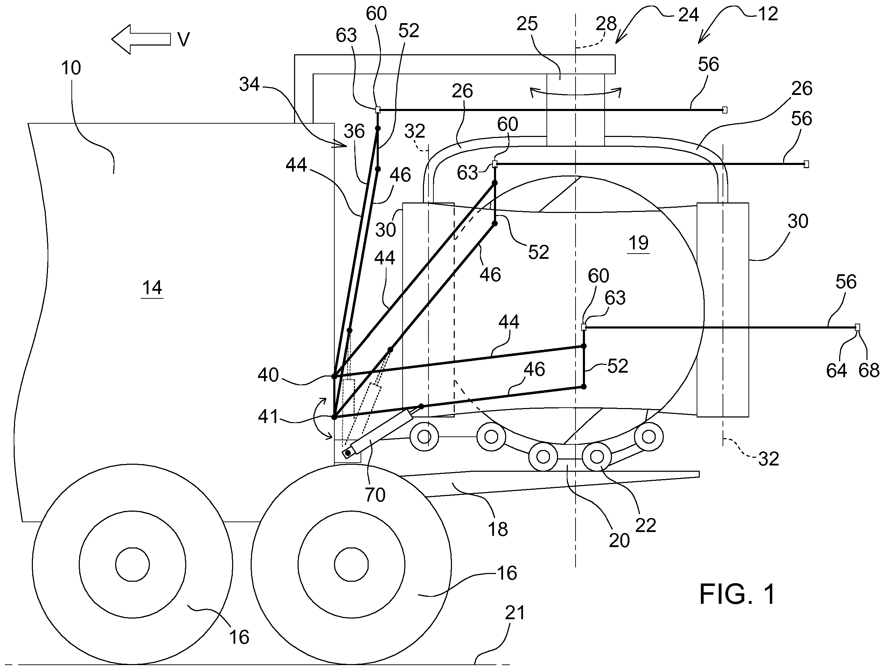

Eine in der Figur 1 schematisch dargestellte Rundballenpresse 10 ist mit einem Ballenwickler 12 kombiniert. Die Rundballenpresse 10 umfasst einen Pressenrahmen 14, der sich auf Rädern 16 abstützt und mittels einer Deichsel (nicht gezeigt) an ein Zugfahrzeug (nicht gezeigt), z. B. einen Ackerschlepper, anschließbar und über einen Untergrund 21 gezogen transportierbar ist.

An einer in Vorwärtsfahrtrichtung (V) hinteren Seite der Rundballenpresse 10 erstreckt sich der Ballenwickler 12. Der Ballenwickler 12 umfasst einen Ballenwicklerrahmen 18, der an den Pressenrahmen 14 angebaut ist. An dem Ballenwicklerrahmen 18 erstreckt sich ein Wickeltisch 20, auf dem ein von der Rundballenpresse 10 gepresster Ballen 19 positionierbar ist. Der Ballenwickler 12 ist ferner mit einer Fördereinrichtung 22 versehen, mit welcher der gepresste Ballen 19 aus der Pressenkammer (nicht gezeigt) der Rundballenpresse 10 auf den Wickeltisch 20 verlagerbar und von dort nach einem Wickelvorgang auf dem Untergrund 21 ablegbar ist. Am Ballenwickler 12 ist eine Ballenwickeleinrichtung 24 ausgebildet. Sie umfasst einen oberhalb am Ballenwicklerrahmen 18 befestigten Rotationsantrieb 25, an dem zwei zueinander gegenüber angeordnete Rotationsarme 26 befestigt sind, die um eine gemeinsame vertikal ausgerichtete Rotationsachse 28 rotieren. Die Rotationsarme 26 erstrecken sich oberhalb eines auf dem Wickeltisch 20 befindlichen Ballens 19 ausgehend vom Rotationsantrieb 25 zunächst quer zur Rotationsachse 28, also horizontal, und verlaufen dann seitlich des Ballens 19 längs zur Rotationsachse 26, also vertikal, in Richtung nach unten (im Wesentlichen parallel zur Rotationsachse 26). An dem sich vertikal erstreckenden Teil der Rotationsarme 26 ist jeweils eine Rolle 30 mit Umwickelungsmaterial, beispielsweise Folie, rotierbar gelagert, die mittels der Rotationsarme 26 während eines Umwicklungsvorgangs zum Umwickeln des Ballens 19 mit Umwickelungsmaterial um diesen herumgeführt werden, wobei die Rollen 30 um eine parallel oder koaxial zum vertikal erstreckenden Teil der Rotationsarme 26 ausgerichtete Rollenrotationsachse 32 rotieren.

Ferner ist ein an der Rundballenpresse 10 oder am Ballenwickler 12 angeordnetes Umgrenzungsgestänge 34 angeordnet. Im dargestellten Ausführungsbeispiel ist das Umgrenzungsgestänge 34 an den Seiten der Rundballenpresse 10 rückseitig derselben befestigt. Das Umgrenzungsgestänge 34 weist einen in Fahrtrichtung (V) linksseitigen ersten und einen rechtsseitigen ersten Gestängeteil 36, 38 auf, die an der Rundballenpresse oder an dem Ballenwickler 10 auf horizontalen Schwenkachsen 40, 41 (links in Fahrtrichtung (V)), 42, 43 (rechts in Fahrtrichtung (V)) schwenkbar gelagert sind. Die beiden ersten Gestängeteile 36, 38 sind als Parallelogrammgestänge ausgebildet, wobei jeweils zwei parallel geführte Lenker 44, 46 (links zur Fahrtrichtung (V)) und 48, 50 (rechts zur Fahrtrichtung (V)) auf den genannten Schwenkachsen 40, 41 bzw. 42, 43 schwenkbar gelagert sind. Die verschwenkbaren Enden der parallel geführten Lenker 44, 46 und 48, 50 sind jeweils über einen vertikal ausgerichteten Verbindungslenker 52 (linksseitig der Fahrtrichtung (V)), 54 (rechtsseitig der Fahrtrichtung (V)) miteinander verbunden. Die beiden ersten Gestängeteile 36, 38 können aus einer unteren, abgesenkten Position in eine obere angehobene Position geschwenkt werden und umgekehrt, wobei aufgrund der Parallelanordnung der Lenker 44, 46 bzw. 48, 50 die Verbindungslenker 52 bzw. 54 beim Schwenken jeweils ihre vertikale Ausrichtung beibehalten. Die Schwenkachsen 40,41 und 42, 43 sind in einem spitzen Winkel α schräg zur Querrichtung der Rundballenpresse 10 angeordnet, so dass die mit den Verbindungslenkern 52, 54, versehenen Enden der ersten Gestängeteile 36, 38 beim Schwenken aus der oberen in die untere Stellung seitlich nach hinten und außen ausschwenken. Mit anderen Worten: beim Schwenken der ersten Gestängeteile 36, 38 werden die Verbindungslenker 52, 54 in einer von oben nach unten gerichteten Schwenkbewegung gleichzeitig in Bezug auf die Rundballenpresse 10 seitlich nach außen verlagert, oder umgekehrt, in einer von unten nach oben gerichteten Schwenkbewegung in Bezug auf die Rundballenpresse 10 von außen nach innen verlagert.

Das Umgrenzungsgestänge 34 umfasst sich an den beidseitigen ersten Gestängeteilen 36, 38 gelenkig anschließende zweite Gestängeteile 56 (linksseitig der Fahrtrichtung (V)) und 58 (rechtsseitig der Fahrtrichtung (V)). Die zweiten Gestängeteile 56, 58 sind mit den Verbindungslenkern 52, 54 mittels an den Verbindungslenkern 52, 54 ausgebildeten Gelenken 60, 62 verbunden, wobei Gelenkachsen 63, 65 der Gelenke 60, 62 vertikal ausgerichtet sind, so dass die zweiten Gestängeteile 56, 58 beim Schwenken aus einer unteren Position in eine obere Position in einer gleichbleibenden horizontalen Ausrichtung gehalten werden, d.h. so dass sich ihre horizontale Ausrichtung beim Schwenken des Umgrenzungsgestänges 34 bzw. der ersten Gestängeteile 36, 38 nicht verändert und lediglich die Höhe und die Position in Längsrichtung der Rundballenpresse 10 verändert. So werden in Bezug auf die Längsrichtung der Rundballenpresse 10 die zweiten Gestängeteile 56, 58 beim Schwenken aus einer in Fahrtrichtung (V) hinteren unteren Stellung in eine in Fahrtrichtung (V) vordere obere Stellung verbracht. Durch das gelenkige Anschließen des zweiten Gestängeteils 56, 58 an den ersten Gestängeteil 36, 38 können Relativbewegungen zwischen dem ersten und dem zweiten Gestängeteil 36, 38, 56, 58 stattfinden, die insbesondere beim Schwenken des Umgrenzungsgestänges zum Tragen kommen, wie im Folgenden näher beschrieben wird.

Die zweiten Gestängeteile 56, 58 sind an den den ersten Gestängeteilen 36, 38 abgewandten Enden 64, 66 durch eine vertikal ausgerichtete Gelenkachse 68 gelenkig zusammengeführt. Damit wird bei heruntergeschwenktem Umgrenzungsgestänge 34 eine rückseitige Umschließung eines Aktionsbereichs 69, der durch die um die Rotationsachse 28 rotierenden Rotationsarme 26 definiert ist, umschlossen. Somit ist der gesamte Aktionsbereich 69, der bei einem Ballenumwicklungsvorgang für eine Bedienperson oder einem Dritten zugänglich wäre durch das Umgrenzungsgestänge 34 absperrbar.

Das Umgrenzungsgestänge 34 umfasst ferner einen Aktuator 70, hier in Form eines Hydraulikzylinders, der das Anheben und Absenken der ersten Gestängeteile 36, 38 gegenüber dem Pressenrahmen 14 erlaubt. Hier kann alternativ auch beispielsweise ein Elektromotor oder eine andere Art von motorisch betreibbarem Aktuator 70 vorgesehen sein. Der Aktuator 70 ist über eine den Umwicklungsvorgang einleitende Steuereinheit (nicht gezeigt) ansteuerbar und mit diesem synchronisiert.

Die das Umgrenzungsgestänge 34 bildenden ersten und zweiten Gestängeteile 36, 38, 56, 58 erstrecken sich somit beidseitig der Rundballenpresse 10 bzw. des Ballenwicklers 12, vorzugsweise seitlich ausgehend von einer Rückseite oder einem rückseitigen Bereich der Rundballenpresse 10 entlang der Seiten des Ballenwicklers 12, und umschließen diesen auf seiner Rückseite, wenn das Umgrenzungsgestänge 34 aus einer oberen Stellung in eine untere Stellung verbracht wird, wobei der gesamte rückseitig der Rundballenpresse gelegene Bereich der Ballenwickeleinrichtung 24 horizontal umgrenzt ist. Dadurch wird ein robustes und stabiles Umgrenzungsgestänge geschaffen, welches bei Bedarf, nämlich beim Ballenwickelvorgang, heruntergeschwenkt werden kann und den Aktionsbereich 69 umgibt und nach außen abgrenzt. Eine Bedienperson oder Dritte werden dadurch effektiv gehindert (davor geschützt) in den Aktionsbereich 69 zu gelangen. Das Umgrenzungsgestänge 34 ist auf einfache Weise wieder aus dem Aktionsbereich 69 des Ballenwicklers 12 zu entfernen, indem es in die obere Stellung, nämlich in die Transport- oder Ballenauswurfstellung geschwenkt wird. In der Transport- oder Ballenauswurfstellung ist der rückwertige Bereich des Ballenwicklers 12 frei gegeben, so dass ein Entladen eines fertig umwickelten Ballens 19 ermöglicht wird. Die untere Stellung stellt die Umgrenzungs- bzw. Ballenumwickelungsstellung dar.

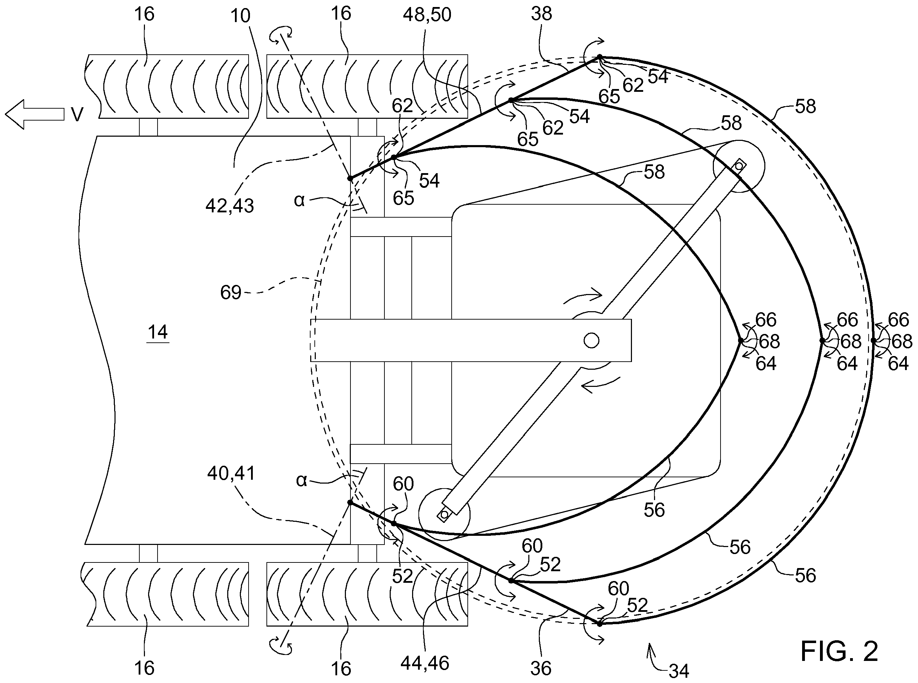

Die zweiten Gestängeteile 56, 58 sind aus einem robusten Material ausgebildet, beispielsweise Stahlrohre, die sich durch die gelenkige Verbindung mit den ersten Gestängeteilen 36, 38 beim Schwenken aus der Transport- oder Ballenauswurfstellung in die Umgrenzungs- bzw. Ballenumwickelungsstellung nach außen bewegen, wie insbesondere in Figur 2 zu sehen ist, wobei der durch das Umgrenzungsgestänge 34 umgrenzte Bereich in der Transport- oder Ballenauswurfstellung eine geringere Breite einnimmt als in der Umgrenzungs- bzw. Ballenumwickelungsstellung. Dies wird durch die exemplarisch in Figur 2 dargestellten Stellungen A, B, und C des Umgrenzungsgestänges 34 verdeutlicht, wobei die obere Stellung A die Transport- oder Ballenauswurfstellung, die Stellung B eine mittlere Stellung und die Stellung C die Umgrenzungs- bzw. Ballenumwickelungsstellung darstellt. Es ist hier deutlich zu sehen, dass die Erstreckung des Umgrenzungsgestänges 34 beim Herunterschwenken aus der Stellung A zur Stellung C hin in Längsrichtungsrichtung des Ballenwicklers 12 abnimmt und in Querrichtung des Ballenwicklers 12 zunimmt, wobei die mit den Verbindungslenkern 52, 54 verbundenen Enden der zweiten Gestängeteile 56, 58 aufgrund der schrägen Anordnung der Schwenkachsen 40, 41, 42, 43 der Bewegung der Verbindungslenker 52, 54 von innen nach außen folgen. Dies hat den Vorteil, dass das Umgrenzungsgestänge 34 in der Transport- und Ballenauswurfstellung eine deutlich geringere Breite einnimmt und somit die für den Transport auf der Straße zugelassene Gesamtbreite der Rundballenpresse eingehalten werden kann. In der Umgrenzungs- bzw. Ballenumwickelungsstellung ragt das Umgrenzungsgestänge 34 hingegen über die Seiten der Rundballenpresse bzw. des Ballenwicklers hinaus und grenzt einen gewissen Bereich, über die Seiten des Ballenwicklers hinaus ab bzw. stellt einen entsprechenden Umgrenzungsschutz über die Seiten der Rundballenpresse 10 hinaus dar.

Wie in Figur 2 zu erkennen ist, bildet das rückseitig an der Rundballenpresse 10 befestigte Umgrenzungsgestänge 34 in der Umgrenzungs- bzw. Ballenumwickelungsstellung eine Umschließung bzw. Umgrenzung des Aktionsbereichs 69 des Ballenwicklers 12 von etwa drei Viertel. Das verbliebene, nicht von dem Umgrenzungsgestänge 34 umschlossene Viertel des Aktionsbereichs 69 des Ballenwicklers 12 wird von der Rückseite der Rundballenpresse 10 abgedeckt bzw. abgegrenzt, nämlich dadurch, dass der Ballenwickler 12 unmittelbar hinter die Rundballenpresse 10 angehängt ist bzw. angebaut ist, und von dieser Seite her jeglicher Zugang zum Ballenwickler 12 durch die Rundballenpresse 10 versperrt ist. In der Transport- bzw. Ballenauswurfstellung ist ein Rotationsbetrieb des Ballenwicklers 12 systembeding (durch die Steuervorrichtung) deaktiviert, so dass keine Gefahr vom Ballenwickler 12 ausgehen kann. Eine Aktivierung des Rotationsbetriebs erfolgt erst wieder, nachdem das Umgrenzungsgestänge 34 in die Umgrenzungs- bzw. Ballenumwickelungsstellung geschwenkt wurde.

## Patentansprüche

1. Rundballenpresse (10) mit Ballenwickler (12), wobei der Ballenwickler (12) eine um eine vertikale Rotationsachse (28) rotierende Ballenwickeleinrichtung (24) mit sich parallel zur Rotationsachse (28) erstreckenden Rotationsarmen (26) umfasst, an denen Rollen (30) mit Umwicklung-smaterial innerhalb eines sich quer und längs zur Rotationsachse (28) erstreckenden Aktionsbereich (69) der Ballenwickeleinrichtung (24) führbar sind, **dadurch gekennzeichnet, dass** ein an der Rundballenpresse (10) oder am Ballenwickler (12) angeordnetes Umgrenzungsgestänge (34) angeordnet ist, welches sich rückseitig der Rundballenpresse (10) erstreckt und aus einer oberen Stellung in eine untere Stellung und umgekehrt schwenkbar ist und mit welchem in der unteren Stellung ein rückseitig der Rundballenpresse (10) gelegener Bereich des Aktionsbereichs (69) der Ballenwickeleinrichtung (24) horizontal umgrenzt ist.

2. Rundballenpresse (10) mit Ballenwickler (12) nach Anspruch 1, **dadurch gekennzeichnet, dass** das Umgrenzungsgestänge (34) beidseitig der Rundballenpresse (10) oder des Ballenwicklers (12) angeordnete erste Gestängeteile (36, 38) umfasst, die an der Rundballenpresse (10) oder an dem Ballenwickler (12) auf horizontalen Schwenkachsen (40, 41, 42, 43) gelagert sind.

3. Rundballenpresse (10) mit Ballenwickler (12) nach Anspruch 2, **dadurch gekennzeichnet, dass** die Schwenkachsen (40, 41, 42, 43) in einem spitzen Winkel (α) zur Querrichtung der Rundballenpresse (10) oder des Ballenwicklers (12) angeordnet sind, derart, dass die ersten Gestängeteile (36, 38) beim Schwenken des Umgrenzungsgestänges (34) aus der oberen in die untere Stellung schräg nach hinten und außen ausschwenken.

4. Rundballenpresse (10) mit Ballenwickler (12) nach Anspruch 2 oder 3, **dadurch gekennzeichnet, dass** das Umgrenzungsgestänge (34) sich an den beidseitigen ersten Gestängeteilen (36, 38) gelenkig anschließende zweite Gestängeteile (56, 58) umfasst.

5. Rundballenpresse (10) mit Ballenwickler (12) nach einem der Ansprüche 2 bis 4, **dadurch gekennzeichnet, dass** die zweiten Gestängeteile (56, 58), an ihren den ersten Gestängeteilen (36, 38) abgewandten Enden (64, 66) gelenkig zusammengeführt sind.

6. Rundballenpresse (10) mit Ballenwickler (12) nach einem der Ansprüche 2 bis 5, **dadurch gekennzeichnet, dass** die ersten Gestängeteile (36, 38) als Parallelogrammgestänge ausgebildet sind.

7. Rundballenpresse (10) mit Ballenwickler (12) nach einem der Ansprüche 4 bis 6, **dadurch gekennzeichnet, dass** die zweiten Gestängeteile (56, 58) durch vertikal ausgerichtete Gelenkachsen (63, 65, 68) mit den ersten Gestängeteilen (36, 38) oder miteinander gelenkig verbunden sind.

## Claims

1. Roundbaler (10) with bale wrapper (12), wherein the bale wrapper (12) comprises a bale-wrapping device (24) which rotates about a vertical axis of rotation (28) and which has rotation arms (26) which extend parallel to the axis of rotation (28) and on which rolls (30) with wrapping material can be guided within an action region (69), which extends transversely and longitudinally with respect to the axis of rotation (28), of the bale-wrapping device (24), **characterized in that** a bounding linkage (34) arranged on the roundbaler (10) or on the bale wrapper (12) is arranged which extends on the rear side of the roundbaler (10) and is pivotable from an upper position into a lower position, and vice versa, and by means of which, in the lower position, a region, which is situated on the rear side of the roundbaler (10), of the action region (69) of the bale-wrapping device (24) is horizontally bounded.

2. Roundbaler (10) with bale wrapper (12) according to Claim 1, **characterized in that** the bounding linkage (34) comprises first linkage parts (36, 38) which are arranged on both sides of the roundbaler (10) or of the bale wrapper (12) and which are mounted on the roundbaler (10) or on the bale wrapper (12) on horizontal pivot axes (40, 41, 42, 43).

3. Roundbaler (10) with bale wrapper (12) according to Claim 2, **characterized in that** the pivot axes (40, 41, 42, 43) are arranged at an acute angle (α) to the transverse direction of the roundbaler (10) or of the bale wrapper (12) in such a way that, during the pivoting of the bounding linkage (34) from the upper into the lower position, the first linkage parts (36, 38) pivot out obliquely rearwardly and outwardly.

4. Roundbaler (10) with bale wrapper (12) according to Claim 2 or 3, **characterized in that** the bounding linkage (34) comprises second linkage parts (56, 58) which are connected in an articulated manner to the first linkage parts (36, 38) which are situated on both sides.

5. Roundbaler (10) with bale wrapper (12) according to one of Claims 2 to 4, **characterized in that** the second linkage parts (56, 58) are brought together in an articulated manner at their ends (64, 66) facing away from the first linkage parts (36, 38).

6. Roundbaler (10) with bale wrapper (12) according to one of Claims 2 to 5, **characterized in that** the first linkage parts (36, 38) are designed as parallelogram linkages.

7. Roundbaler (10) with bale wrapper (12) according to one of Claims 4 to 6, **characterized in that** the second linkage parts (56, 58) are connected to the first linkage parts (36, 38) by vertically oriented articulation axes (63, 65, 68) or are connected to one another in an articulated manner.

## Revendications

1. Presse à ballots ronds (10) comprenant une enrouleuse de ballots (12), l'enrouleuse de ballots (12) comportant un dispositif d'enroulement de ballots (24) en rotation autour d'un axe de rotation vertical (28) et comprenant des bras de rotation (26) qui s'étendent parallèlement à l'axe de rotation (28), au niveau desquels des rouleaux (30) de matériau d'enveloppement peuvent être guidés à l'intérieur d'une zone d'action (69) du dispositif d'enroulement de ballots (24) qui s'étend transversalement et longitudinalement par rapport à l'axe de rotation (28), **caractérisée en ce qu'**une tringlerie de délimitation (34) est disposée au niveau de la presse à ballots ronds (10) ou de l'enrouleuse de ballots (12), laquelle s'étend du côté arrière de la presse à ballots ronds (10) et peut être pivotée depuis une position haute dans une position basse et inversement et avec laquelle, dans la position basse, une zone de la zone d'action (69) du dispositif d'enroulement de ballots (24) qui se trouve du côté arrière de la presse à ballots ronds (10) est délimitée horizontalement.

2. Presse à ballots ronds (10) comprenant une enrouleuse de ballots (12) selon la revendication 1, **caractérisée en ce que** la tringlerie de délimitation (34) comporte des premières parties de tringlerie (36, 38) disposées des deux côtés de la presse à ballots ronds (10) ou de l'enrouleuse de ballots (12), lesquelles sont montées sur des axes de pivotement horizontaux (40, 41, 42, 43) au niveau de la presse à ballots ronds (10) ou de l'enrouleuse de ballots (12).

3. Presse à ballots ronds (10) comprenant une enrouleuse de ballots (12) selon la revendication 2, **caractérisée en ce que** les axes de pivotement (40, 41, 42, 43) sont disposés à un angle aigu (α) par rapport à la direction transversale de la presse à ballots ronds (10) ou de l'enrouleuse de ballots (12), de telle sorte que les premières parties de tringlerie (36, 38), lors du pivotement de la tringlerie de délimitation (34) depuis la position haute dans la position basse, se déportent en biais vers l'arrière et l'extérieur.

4. Presse à ballots ronds (10) comprenant une enrouleuse de ballots (12) selon la revendication 2 ou 3, **caractérisée en ce que** la tringlerie de délimitation (34) comporte des deuxièmes parties de tringlerie (56, 58) qui se rattachent de manière articulée aux premières parties de tringlerie (36, 38) des deux côtés.

5. Presse à ballots ronds (10) comprenant une enrouleuse de ballots (12) selon l'une des revendications 2 à 4, **caractérisée en ce que** les deuxièmes parties de tringlerie (56, 58) sont réunies de manière articulée au niveau de leurs extrémités (64, 66) à l'opposé des premières parties de tringlerie (36, 38).

6. Presse à ballots ronds (10) comprenant une enrouleuse de ballots (12) selon l'une des revendications 2 à 5, **caractérisée en ce que** les premières parties de tringlerie (36, 38) sont réalisées sous la forme d'une tringlerie en parallélogramme.

7. Presse à ballots ronds (10) comprenant une enrouleuse de ballots (12) selon l'une des revendications 4 à 6, **caractérisée en ce que** les deuxièmes parties de tringlerie (56, 58) sont reliées de manière articulée aux premières parties de tringlerie (36, 38) ou entre elles par des axes d'articulation (63, 65, 68) orientés verticalement.
